# FASCICULE DE BREVET EUROPEEN

(11) **EP 3 256 348 B1**
(45) Date de publication et mention de la délivrance du brevet: **04.09.2019**
(21) Numéro de dépôt: 16703596.3
(22) Date de dépôt: 22.01.2016
(51) Int. Cl.: B60R 19/18

(54) **SUPPORT CENTRAL DE PARE-CHOC ARRIÈRE**
ZENTRALER TRÄGER FÜR HINTERE STOSSSTANGE
REAR BUMPER CENTRAL SUPPORT

(30) Priorité: 11.02.2015 FR 1551117
(43) Date de publication de la demande: 20.12.2017
(73) Titulaire: PSA AUTOMOBILES S.A., 78300 Poissy (FR)
(72) Inventeur: THOR, Tou, 25150 Bourguignon (FR)
(86) Numéro de dépôt international: PCT/FR2016/050131
(87) Numéro de publication internationale: WO 2016/128632

(56) Documents cités:
- EP-A1- 2 048 064
- EP-A1- 2 783 922

## Description

L'invention concerne un ensemble comprenant une structure d'un véhicule automobile et un système d'absorption de chocs, ledit système d'absorption de chocs comprenant une pièce permettant d'assurer le support d'une pièce de carrosserie. L'invention concerne également un véhicule comprenant un tel ensemble.

Il est connu de l'art antérieur des pièces de support de pare-chocs permettant à la fois de soutenir la peau de pare-chocs et de la positionner par rapport aux autres éléments de carrosserie voire par rapport à un ouvrant. Ces pièces peuvent également être dimensionnées de manière à dissiper un maximum d'énergie en provenance d'un choc et de transmettre un minimum d'effort à la structure. A cet effet, les pièces de support de pare-chocs peuvent présenter des éléments compressibles.

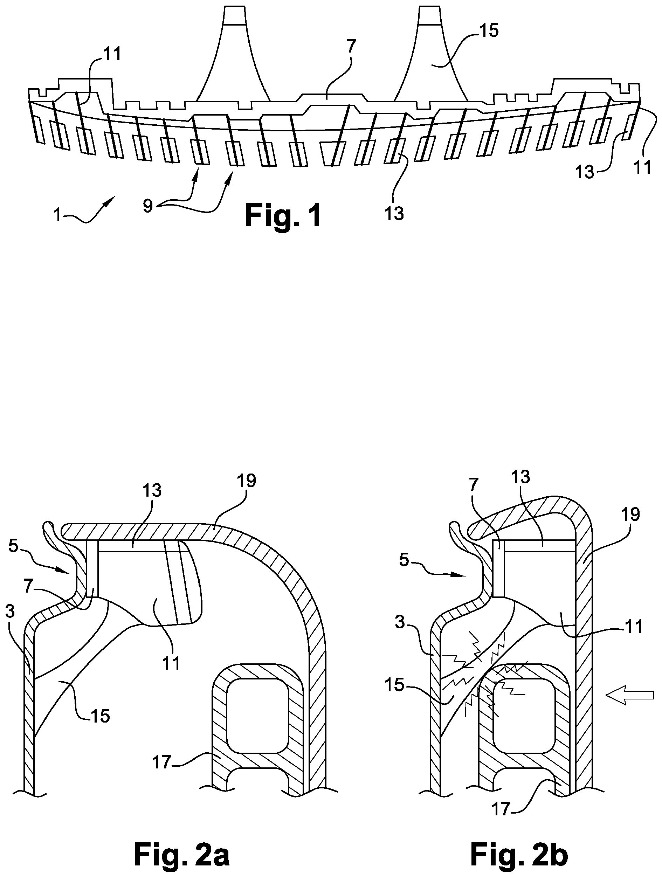

Un exemple de pièce de support de pare-chocs connue est représenté sur les figures 1, 2a et 2b. La pièce de support 1 est fixée à un élément de structure 3, ici une face arrière de véhicule automobile, au niveau d'un renflement 5 transversal. La pièce de pare-chocs comprend une base 7 destinée à être fixée sur la structure 3 et des éléments de support 9 destinés à venir se placer sous l'une des faces de la peau de pare-chocs 19. Ces éléments de support 9 sont formés par une nervure 11 verticale s'élevant depuis la base 7 et reliés par leur tranche supérieure à des éléments d'appui 13 formant des surfaces d'appui sur lesquelles vient se poser la peau de pare-chocs 19. Ces éléments de support 9 sont compressibles de sorte à permettre de répondre aux exigences de sécurité passive par exemple en cas de choc-piéton. A cet effet, les nervures 11 verticales ne s'élèvent pas perpendiculairement par rapport à la base 7 mais sont avantageusement inclinées par rapport à sa surface comme illustré sur la figure 1. En cas de collision, les éléments de support 9 se déforment alors par une inclinaison plus prononcée sous l'effet de la pression exercée par la peau de pare-chocs. Le volume formé par les éléments de support 9 est comprimé.

La pièce de support 1 a également une fonction de positionnement de la peau de pare-chocs. A ce titre, il est important qu'elle montre une certaine rigidité selon l'axe vertical afin de maintenir le positionnement de la peau de pare-chocs 19 lorsque celle-ci est sollicitée selon cet axe. C'est le cas par exemple lorsqu'un objet est posé sur la peau de pare-chocs. Une pression est alors exercée vers le bas mais le pare-chocs ne doit pas bouger pour autant. C'est pourquoi, la pièce de support 1 de pare-chocs comprend également au moins un pied 15 de fixation et de soutien venant se fixer sur la structure 3 du véhicule en dessous du renflement 5.

Enfin, la pièce de support 1 de pare-chocs fait partie d'un système d'absorption de choc comprenant, en plus de ladite pièce de support, au moins une poutre 17 et une peau de pare-chocs 19. La poutre 17 est disposée dans le système de façon à être placée sous la pièce de support 1 et en arrière de celle-ci selon l'orientation générale du véhicule. En effet, au moins dans sa partie centrale, la poutre 17 est écartée de la structure 3 du véhicule, si bien qu'en cas de collision, la poutre 17 va absorber le choc et se déplacer en direction de la structure 3 du véhicule. Malheureusement, il a été constaté que lors de sa course d'intrusion, la poutre 17 touche le pied 15 de fixation et de soutien de la pièce de support 1, ce qui a pour conséquence de transmettre à la structure une partie des efforts qui devraient normalement être dissipés. Or il est souhaitable de minimiser la transmission d'effort à la structure du véhicule 3. Le document EP2783922 décrit un ensemble selon le préambule de la revendication 1.

L'invention a pour objectif de répondre aux inconvénients de l'art antérieur en proposant un nouveau type de pièce de support de pare-chocs permettant de minimiser la transmission des efforts à la structure tout en répondant aux exigences en termes de rigidité verticale et de sécurité passive.

A cet effet, l'invention a pour objet un ensemble d'après la revendication 1.

La poutre d'absorption de chocs est montée sur la structure du véhicule de sorte qu'au moins sa partie centrale soit écartée de l'élément de structure du véhicule sur lequel est fixée la base de la pièce de support de pare-chocs.

La pièce de support de pare-chocs comprend en outre au moins un élément de support de la peau de pare-chocs.

La pièce de support est un support central de pare-chocs arrière de véhicule.

Comme on l'aura compris à la lecture de la définition qui vient d'en être donnée l'invention consiste, selon un premier aspect de l'invention, à transférer la fonction de maintien en position selon l'axe vertical exercée auparavant par le pied à un élément de renfort situé en dehors de la course d'intrusion de la poutre transversale de l'absorbeur de choc. De la sorte, il est possible de réduire l'épaisseur dudit pied, de le couder, ou même de le supprimer. Ainsi, la poutre ne rencontre plus d'obstacle lors de sa course d'intrusion et par conséquent ne risque pas de transmettre des efforts à la structure par interception du pied.

L'invention est remarquable en ce que la rigidité subjective de l'ensemble de pare-chocs selon l'axe vertical est maintenue. En effet, une des extrémités de l'élément de renfort étant placée au-dessus de la poutre, l'élément de renfort va venir se poser en appui sur la poutre lorsqu'il est sollicité selon l'axe vertical, par exemple lorsqu'une pression vers le bas est exercée sur la peau de pare-chocs. L'invention propose de remplacer une pièce de support assurant le maintien en position d'un pare-chocs sur la structure d'un véhicule par un montage en porte-à-faux, par une pièce de support dimensionnée pour prendre appui au niveau de ses deux extrémités longitudinales à la fois sur la structure du véhicule et sur la poutre d'absorption de chocs. L'invention tire donc profit de la présence d'une poutre d'absorption de choc située à proximité de la pièce de support mais disposée écartée de l'élément de structure du véhicule, pour s'appuyer dessus en vue de conserver une rigidité subjective selon l'axe verticale sans employer une jambe de force.

Selon des modes particuliers de réalisation, la pièce de support peut comprendre l'une ou plusieurs des caractéristiques suivantes, prises isolément ou selon toutes les combinaisons possibles :
- L'élément de renfort présente une face inférieure et est dimensionné pour qu'au niveau de son extrémité terminale, sa face inférieure affleure ou soit posée sur la face supérieure de la poutre. Un tel dimensionnement permet de limiter voir de supprimer un déplacement de la peau de pare-chocs lors d'une sollicitation selon l'axe vertical.
- L'élément de renfort est dépourvu de moyens de fixation à la poutre. Selon l'invention, l'élément de renfort peut venir se poser sur la poutre mais n'y est pas fixé. La poutre et l'élément de renfort coulissent l'un par rapport à l'autre librement en cas de déplacement de la poutre.
- La pièce de support comprend au moins une jambe de fixation pour sa fixation à la structure d'un véhicule et la ou les jambes de fixation sont coudées. Une telle configuration permet de placer la ou les jambes de fixation hors de la course d'intrusion de la poutre en cas de collision.
- La pièce de support est dépourvue de jambe de fixation. Dans une telle configuration le maintien en position verticale de la pièce de support est assuré uniquement par la fixation de sa base à l'élément de structure et, lorsque nécessaire, par l'appui pris sur la poutre par l'élément de renfort.

Selon un deuxième aspect de l'invention, la pièce de support présente à la fois une rigidité lorsqu'elle est sollicitée selon l'axe vertical mais également une souplesse lorsqu'elle est sollicitée selon une direction longitudinale. A cet effet, les éléments de renforts montrent une aptitude à la déformation et/ou à l'écrasement lorsqu'ils sont sollicités dans une direction autre que la direction verticale. La pièce de support assure alors la double fonction de support de pare-chocs et d'absorbeur de chocs.

Selon l'invention:
- L'élément de renfort se présente sous forme d'un profilé et comprend au niveau de son extrémité terminale une face formant une surface sensiblement parallèle à la base et destinée à coopérer avec la peau de pare-chocs en vue de la déformation dudit élément de renfort. La présence d'une face coopérant avec la peau de pare-chocs favorise la déformation de l'élément de renfort et évite la génération de points durs sous la peau de pare-chocs.
- L'élément de renfort se présente sous forme d'un profilé et comprend au niveau de son extrémité terminale une face formant une surface sensiblement parallèle à la base et destinée à coopérer avec la peau de pare-chocs en vue de la déformation dudit élément de renfort, ladite face de l'extrémité terminale présente une hauteur inférieure à la hauteur présentée par l'élément de renfort au niveau de son extrémité reliée à la base. Cette configuration offre le double avantage de proposer un gain en masse et de contribuer au tarage de l'effort à fournir pour déformer l'élément de renfort.

La pièce de support peut alors comprendre l'une ou plusieurs des caractéristiques suivantes, prises isolément ou selon toutes les combinaisons possibles (y compris avec les caractéristiques vues précédemment):
- L'élément de renfort se présente sous forme d'un profilé et comprend au moins une face latérale s'étendant depuis la base jusqu'à l'extrémité terminale et la ou les faces latérales sont courbées ou sont inclinées par rapport à la base. Cette configuration favorise la déformation de l'élément de renfort dans sa fonction d'absorbeur de choc. Elle offre en outre la possibilité d'exploiter l'élasticité du matériau dont est constitué l'élément de renfort. La déformation générée peut donc être réversible tant qu'elle n'a pas atteint la limite d'élasticité présentée par l'élément de renfort.
- L'élément de renfort se présente sous forme d'un profilé et comprend au moins une face latérale s'étendant depuis la base jusqu'à l'extrémité terminale et au moins une face latérale présente au moins une zone d'épaisseur réduite. Une telle configuration permet à l'élément de renfort de présenter une zone de moindre résistance qui facilitera la déformation dudit élément lorsqu'une pression est exercée sur son extrémité terminale en direction de la base.
- L'élément de renfort se présente sous forme d'un profilé et comprend deux faces latérales, et une des faces latérales présente une épaisseur inférieure à l'épaisseur de l'autre face.
- L'élément de renfort est dépourvu de cloison transversale.
- L'élément absorbeur de choc a une section transversale en forme de parallélogramme non droit, ou de forme circulaire, elliptique ou triangulaire.
- L'élément de renfort porte un élément de support de la peau de pare-chocs et/ou est dimensionné pour que la sa face supérieure soit placée sous la peau de pare-chocs de sorte à ce que ladite peau de pare-chocs se pose dessus. L'élément de renfort a ainsi une fonction de support de la peau de pare-chocs.
- L'élément de renfort se présente sous forme d'un profilé comprenant au moins une paroi latérale s'étendant depuis la base jusqu'à l'extrémité terminale et la ou les faces latérales portent un élément de support de la peau de pare-chocs, de préférence l'élément de support est porté sur la face extérieure de la paroi latérale.

Selon un troisième aspect de l'invention, la pièce de support est simple à produire et à monter de manière à limiter les coûts qui y sont associés. La pièce de support peut alors comprendre l'une ou plusieurs des caractéristiques suivantes, prises isolément ou selon toutes les combinaisons possibles (y compris avec les caractéristiques vues plus haut) :
- Au moins un élément de renfort est venu de matière avec la base. Cette configuration permet de limiter les coûts de montage et de fabrication de la pièce.
- La pièce de support est en matériau plastique, de préférence en polypropylène.

Enfin, l'invention concerne un véhicule automobile caractérisé en ce qu'il comprend un ensemble tel que défini ci-avant.

On notera que le document FR2933055 décrit un système d'absorption de choc disposé sur la face avant d'un véhicule et comportant une poutre ainsi qu'un absorbeur de choc central prenant appui latéralement sur ladite poutre. Ce système comprend des absorbeurs de choc dits de choc réparabilité, capables de montrer une déformation réversible. L'un des appuis latéraux de l'absorbeur peut être saillant par rapport à l'autre de façon à minimiser les blessures infligées en cas de choc piéton. Ce type d'absorbeur de choc est différent de l'invention, puisque selon l'invention la pièce de support dans sa fonction d'absorbeur de choc n'est pas reliée à la poutre et ne prend pas appui sur elle pour se déformer. L'objectif du dispositif selon l'invention est justement d'éviter ou de minimiser le contact entre la pièce de support et la poutre lors d'une collision afin d'éviter de transmettre l'énergie de la déformation de la poutre à la structure par le biais de la pièce de support de pare-chocs.

L'invention sera bien comprise et d'autres aspects et avantages apparaîtront clairement au vu de la description qui suit donnée à titre d'exemple en référence aux planches de dessins annexées sur lesquelles :
- la figure 1 est une représentation d'une pièce de support selon l'art antérieur telle que vue de dessus ;
- les figures 2a et 2b sont des représentations d'un système d'absorption de chocs selon l'art antérieur vu selon une coupe de profil illustrant la cinématique d'écrasement du système d'absorption de chocs lors d'une collision ;
- la figure 3 est une représentation d'une pièce de support selon l'invention vue en perspective ;
- les figures 4a et 4b sont des représentations d'un système d'absorption de chocs selon l'invention vu selon une coupe de profil illustrant la cinématique d'écrasement du système d'absorption de chocs lors d'une collision ;
- la figure 5 est une représentation d'une pièce de support selon l'invention telle que vu de dessus ;
- les figures 6a et 6b sont des représentations partielle d'une pièce de support selon l'invention vu de dessus et illustrant la cinématique d'écrasement.

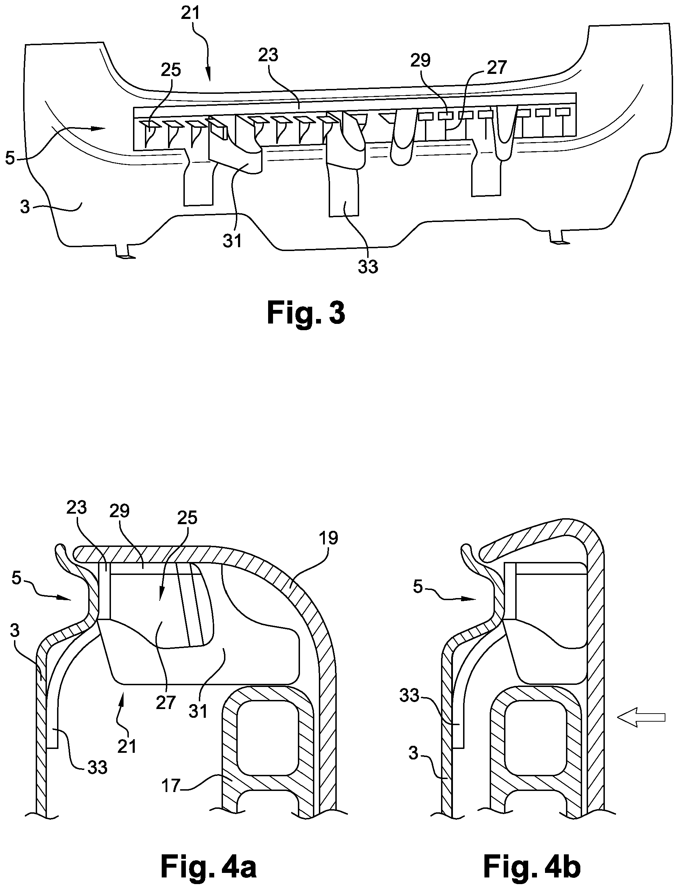

Les figures 1, 2a et 2b ayant été commentées en partie introductive, on se réfèrera maintenant à la figure 3 montrant une pièce de support 21 de pare-chocs selon l'invention. La pièce de support 21 comprend une base 23 qui est fixée sur un élément de structure 3 de la face arrière d'un véhicule automobile par exemple au niveau d'un renflement transversal 5. Elle comprend des éléments de support 25 en porte à faux depuis la base 23. Dans notre exemple, les éléments de support 25 sont formés par des nervures verticales 27 s'élevant depuis la surface de la base 23. Les nervures 27 sont reliées par leur tranche supérieure à des éléments d'appui 29 formant des surfaces d'appui sur lesquelles vient se poser la peau de pare-chocs (non représentée). La section selon un plan YZ de ces éléments de support 25 montre une forme de T.

La pièce de support 21 selon l'invention comprend en outre au moins un élément de renfort 31 préférentiellement disposé intercalé entre deux éléments de support 25 ou placé adjacent à au moins un élément de support 25. Comme on le verra plus loin, l'élément de renfort 31 peut également être porteur d'un l'élément de support et venu de matière avec ce dernier, ou se substituer à lui. Le ou les éléments de renfort 31 sont chacun reliés à la base 23 par une extrémité, dite initiale, et dimensionnés pour s'étendre selon la direction longitudinale par rapport au véhicule jusqu'à placer leur extrémité opposée, dite terminale, au-dessus de la poutre 17 comme illustré sur la figure 4a. Ainsi, lors d'une sollicitation du pare-chocs selon l'axe vertical, par exemple lorsqu'on exerce une poussée vers le bas sur la peau de pare-chocs 19, l'élément de renfort 31 prend appui sur la poutre 17. La pièce de support 21 est donc maintenue en position selon l'axe vertical par au moins deux points d'appui écartés selon l'axe longitudinal du véhicule, l'un étant constitué par les moyens de fixation de sa base 23 à la structure 3 du véhicule, le deuxième étant constitué par un appui sur la poutre 17 par le biais de l'extrémité terminale de son ou ses éléments de renfort 31.

Selon un mode de réalisation préféré de l'invention, l'élément de renfort 31 est en outre dimensionné pour que son bord inférieur se place de manière à affleurer la surface supérieure de la poutre 17 ou de manière à venir se poser sur ladite surface supérieure de la poutre 17. Ce mode de réalisation est avantageux en ce qu'il limite la course de l'élément de renfort 31 lorsqu'il vient se placer en appui sur la poutre 17 lors d'une sollicitation selon l'axe vertical.

La pièce de support 31 selon l'invention comprend de manière préférentielle une jambe de fixation 33 à la structure 3 du véhicule. Cette jambe de fixation 33 est avantageusement coudée de manière à se placer hors de la course d'intrusion de la poutre 17 en cas de choc comme illustré sur les figures 4a et 4b. Selon une variante de l'invention non représentée, la pièce de support ne comprend pas de jambe de fixation, de sorte qu'elle est fixée à la structure du véhicule par sa base uniquement. Lorsque la pièce comprend une jambe de fixation 33, on notera que cette dernière peut être de faible épaisseur puisqu'elle est soumise à une contrainte mécanique moins importante que dans l'art antérieur.

Du fait de la présence d'au moins un élément de renfort 31, la pièce de support selon l'invention est prolongée en direction de la peau de pare-chocs 19 par rapport aux pièces de support connues comme on peut le voir en comparant les figures 2a et 4a. Ceci est avantageux puisqu'en cas de collision, l'élément de renfort 31 va entrer plus rapidement en contact avec ladite peau de pare-chocs 19 et donc amorcer la déformation de la pièce de support 21 plus tôt. Le ou les éléments de renforts 31 ont donc également une fonction d'absorbeurs de chocs aptes à se déformer sous une pression exercée selon une direction sensiblement longitudinale par rapport au véhicule.

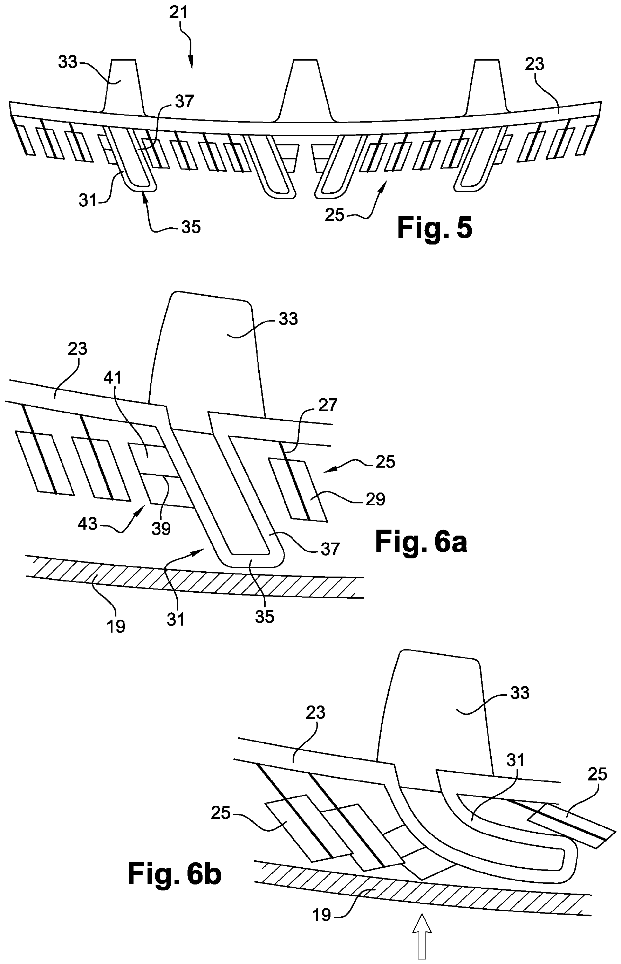

De préférence et comme illustré sur la figure 5, le ou les éléments de renfort 31 se présentent sous forme de profilé comprenant au moins une face latérale 37, la ou les faces latérales 37 s'étendant depuis la base 23 (c'est-à-dire depuis l'extrémité initiale) jusqu'à l'extrémité terminale de l'élément de renfort 31.

Le ou les éléments de renforts 31 sont donc préférentiellement compressibles et ne doivent pas générer de points durs sous la peau de pare-chocs 19. Pour ce faire l'extrémité terminale de l'élément de renfort 31 présente avantageusement une face 35 destinée à venir en contact avec ladite peau de pare-chocs 19. Cette face 35 va coopérer avec la peau de pare-chocs 19 pour transmettre les efforts aux faces latérales 37 de l'élément de renfort 31 en vue de leur déformation. En outre, afin de favoriser la déformation de l'élément de renfort 31, la ou les faces latérales 37 de l'élément de renfort sont courbées ou inclinées par rapport à la base 23 de manière à présenter un angle aigu avec ladite base 23, ouvert par exemple en direction de l'axe longitudinal central du véhicule. Ainsi, une pression exercée sur l'extrémité terminale d'un élément de renfort 31 générera une déformation dudit élément par écrasement sur lui-même (si par exemple l'élément de renfort 31 se présente sous forme d'un profilé de section circulaire) ou par écrasement contre la base 23 (si par exemple, et comme représenté sur les dessins 6a et 6b, l'élément de renfort 31 se présente sous forme d'un profilé dont la section forme un parallélogramme non droit).

L'élément de renfort 31 selon l'invention se présente préférentiellement sous forme d'un profilé dont la section a une forme favorisant l'écrasement ou la compression dudit élément de renfort sur lui-même ou contre la base 23 lors de l'application d'une pression sur son extrémité terminale 35 dans une direction autre que la direction verticale. Parmi les formes de section possibles dans le cadre de l'invention, on citera de manière non exhaustive, les formes elliptiques, circulaires, triangulaires et les parallélogrammes.

De manière avantageuse, l'élément de renfort 31 selon l'invention ne présente pas de cloison interne afin de favoriser son aptitude à l'écrasement et/ou à la compression. L'invention est remarquable en ce que l'élément de renfort 31 dans son rôle d'absorbeur de chocs va aider à la compression de la pièce de support 21 en agissant sur les éléments de supports 25 qui lui sont adjacents avant même que ceux-ci ne soient en contact avec la peau de pare-chocs 19.

Selon une mise en oeuvre préférée de l'invention, l'élément de renfort 31 se présente sous forme d'un profilé d'épaisseur constante. Cependant, il est possible dans le cadre de l'invention que l'épaisseur du profilé varie.

De même, l'élément de renfort 31 se présente de préférence sous forme d'un profilé dont les différentes parois (35, 37) ont la même épaisseur et montrent une épaisseur constante. Néanmoins, il est possible dans le cadre de l'invention d'envisager un profilé dont les différentes parois (35, 37) ont des épaisseurs différentes. De même, il est envisageable de faire varier l'épaisseur d'au moins une paroi sur sa longueur en vue de faciliter la déformation dudit élément de renfort 31. On prendra soin néanmoins de veiller à conserver la rigidité de l'élément 31 selon l'axe vertical.

Dans un souci de gain en masse, l'élément de renfort 31 se présente préférentiellement sous forme d'un profilé dont l'extrémité terminale, par exemple sa face 35 opposée à la base 23, à une hauteur inférieure à la hauteur de l'extrémité initiale reliée à la base 23. Cet enlèvement de matière permet sans pour autant réduire les performances en termes de rigidité selon l'axe vertical à la fois d'alléger la pièce de support et de diminuer l'effort nécessaire à la déformation de l'élément de renfort.

De manière optionnelle, l'élément de renfort 31 peut également assurer également une fonction de soutien de la peau de pare-chocs. Ainsi comme illustré sur les figures 5, 6a et 6b, l'élément de renfort 31 est, de manière optionnelle, porteur d'au moins un élément support 43 du pare-chocs. Le dit élément de support 43 est formé par exemple d'au moins un nervure verticale 39 s'élevant depuis une paroi latérale 37 de l'élément de renfort 31 qui est reliée par sa tranche supérieure à un élément d'appui 41 formant une surface d'appui sur laquelle vient se poser la peau de pare-chocs. La surface d'appui 41 portée par l'élément de renfort est alignée avec les surfaces d'appuis 29 portées par la base 23. Selon une variante de l'invention, pouvant être complémentaire à la présence d'éléments de support 43, la surface de la tranche supérieure des parois (35, 37) de l'élément de renfort 31 est alignée selon l'axe vertical avec la surface d'appui des éléments de support 23 de façon à contribuer au soutien de la peau de pare-chocs. Avantageusement, la tranche supérieure des parois de l'élément de renfort 31 est découpée pour suivre la courbure de la peau de pare-chocs 19.

Selon une variante préférée de l'invention, au moins un élément de renfort est dimensionné pour constituer un élément de support de la peau de pare-chocs. De préférence, au moins un élément de renfort 31 porte un élément de support 43, et est de préférence venu de matière avec lui. Selon une autre variante tous les éléments de support sont constitués par des éléments de renfort 31. Selon une mise en oeuvre de l'invention les éléments de renforts 31 sont disposés alternés avec au moins un élément de support 25 intermédiaire le long de la base 23 de la pièce de support 21.

Selon un mode de réalisation préféré de l'invention, le ou les éléments de renforts 31 sont venus de matière avec la base 23. L'invention est ainsi remarquable en ce qu'elle n'implique pas de modification dans le montage de l'élément de support 21, ni n'ajoute de pièces. Préférentiellement, la pièce de support 21 est en matériau plastique ou composite. Par exemple elle en matériau plastique à base de polypropylène.

Cette solution a l'avantage d'être simple et peu coûteuse à mettre en oeuvre.

L'invention concerne aussi un système d'absorption de choc comprenant une pièce de support telle que décrite plus haut, une peau de pare-chocs et une poutre d'absorption de choc. Le système peut en outre comprendre un absorbeur de chocs monté sur la poutre et disposé entre la peau de pare-chocs et ladite poutre.

Enfin l'invention concerne les véhicules équipés d'une telle pièce de support et/ou d'un tel système d'absorption de choc.

## Revendications

1. Ensemble comprenant une structure d'un véhicule automobile et un système d'absorption de chocs, ledit système d'absorption de chocs comprenant une pièce de support (21) de pare-chocs, au moins une poutre (17) d'absorption de chocs montée sur la structure d'un véhicule, une peau de pare-chocs (19) couvrant la poutre (17) et la pièce de support (21), ladite pièce de support (21) comprenant une base (23) présentant des moyens de fixation à un élément (3) de la structure d'un véhicule automobile, la pièce (21) comprenant au moins un élément de renfort (31) relié à la base (23) par une de ses extrémités et dimensionné pour s'étendre jusqu'à placer son autre extrémité, dite terminale, au-dessus de la poutre (17) d'absorption de chocs, l'élément de renfort (31) se présentant sous forme d'un profilé et comprenant au niveau de son extrémité terminale une face (35) formant une surface sensiblement parallèle à la base (23) et destinée à coopérer avec la peau de pare-chocs en vue de la déformation dudit élément de renfort (31), **caractérisé en ce que** ladite face (35) de l'extrémité terminale présente une hauteur inférieure à la hauteur présentée par l'élément de renfort au niveau de son extrémité reliée à la base.

2. Ensemble selon la revendication 1 **caractérisé en ce que** l'élément de renfort (31) présente une face inférieure et est dimensionné pour qu'au niveau de son extrémité terminale, sa face inférieure affleure ou soit posée sur la face supérieure de la poutre (17).

3. Ensemble selon l'une des revendications 1 ou 2, la pièce de support (21) comprenant au moins une jambe de fixation (33) pour sa fixation à la structure d'un véhicule, **caractérisé en ce que** la ou les jambes de fixation (33) sont coudées.

4. Ensemble selon l'une des revendications 1 à 3 **caractérisé en ce qu'**au moins un élément de renfort (31) est venu de matière avec la base (23).

5. Ensemble selon l'une des revendications 1 à 4 **caractérisé en ce que** l'élément de renfort (31) se présente sous forme d'un profilé et comprend au moins une face latérale (37) s'étendant depuis la base (23) jusqu'à l'extrémité terminale et **en ce que** la ou les faces latérales (37) sont courbées ou inclinées par rapport à la base (23).

6. Ensemble selon l'une des revendications 1 à 5 **caractérisé en ce que** l'élément de renfort (31) se présente sous forme d'un profilé et comprend au moins une face latérale (37) s'étendant depuis la base jusqu'à l'extrémité terminale et **en ce qu'**au moins une face latérale (37) présente au moins une zone d'épaisseur réduite.

7. Ensemble selon l'une des revendications 1 à 6 **caractérisé en ce que** l'élément de renfort (31) porte un élément de support (43) de la peau de pare-chocs (19) et/ou est dimensionné pour que la sa face supérieure soit placée sous la peau de pare-chocs (19) de sorte à ce que ladite peau de pare-chocs se pose dessus.

8. Ensemble selon l'une des revendications 1 à 7 **caractérisé en ce que** la pièce de support (21) est en matériau plastique, de préférence en polypropylène.

9. Véhicule automobile **caractérisé en ce qu'**il comprend au moins un ensemble selon l'une des revendications 1 à 8.

## Patentansprüche

1. Einheit, die eine Struktur eines Kraftfahrzeugs und ein Stoßabsorptionssystem umfasst, wobei das Stoßabsorptionssystem ein Tragteil (21) von Stoßfängern umfasst, mindestens einen Träger (17) zur Absorption von Stößen, der auf eine Fahrzeughaut (19), die den Träger (17) und das Tragelement (21) abdeckt, montiert ist, wobei das Tragteil (21) eine Basis (23) umfasst, die Mittel zum Befestigen an einem Element (3) der Struktur eines Kraftfahrzeugs aufweist, wobei das Teil (21) mindestens ein Verstärkungselement (31) umfasst, das mit der Basis (23) durch eines seiner Enden verbunden und bemessen ist, um sich zu erstrecken, bis sein anderes Ende, Terminalende genannt, oberhalb des Stoßabsorptionsträgers (17) platziert ist, wobei das Verstärkungselement (31) die Form eines Profils aufweist und im Bereich seines Terminalendes eine Fläche (35) umfasst, die eine Oberfläche bildet, die im Wesentlichen zu der Basis (23) parallel und dazu bestimmt ist, mit der Stoßfängerhaut zum Verformen des Verstärkungselements (31) zusammenzuwirken, **dadurch gekennzeichnet, dass** die Fläche (35) des Terminalendes eine Höhe aufweist, die kleiner ist als die Höhe, die das Verstärkungselement im Bereich seines Endes, das mit der Basis verbunden ist, aufweist.

2. Einheit nach Anspruch 1, **dadurch gekennzeichnet, dass** das Verstärkungselement (31) eine untere Fläche aufweist und bemessen ist, damit im Bereich seines Terminalendes seine untere Fläche mit der oberen Fläche des Trägers (17) bündig oder auf ihr aufgelegt ist.

3. Einheit nach einem der Ansprüche 1 oder 2, wobei das Tragteil (21) mindestens ein Befestigungsbein (33) für sein Befestigen an der Struktur eines Fahrzeugs umfasst, **dadurch gekennzeichnet, dass** das oder die Befestigungsbeine (33) abgewinkelt sind.

4. Einheit nach einem der Ansprüche 1 bis 3, **dadurch gekennzeichnet, dass** mindestens ein Verstärkungselement (31) aus einem Stück mit der Basis (23) besteht.

5. Einheit nach einem der Ansprüche 1 bis 4, **dadurch gekennzeichnet, dass** das Verstärkungselement (31) die Form eines Profils aufweist und mindestens eine Seitenfläche (37) umfasst, die sich von der Basis (23) bis zu dem Terminalende erstreckt, und dass die Seitenfläche(n) (37) gekrümmt oder bezüglich der Basis (23) geneigt ist (sind).

6. Einheit nach einem der Ansprüche 1 bis 5, **dadurch gekennzeichnet, dass** das Verstärkungselement (31) die Form eines Profils aufweist und mindestens eine Seitenfläche (37) umfasst, die sich von der Basis bis zu dem Terminalende erstreckt, und dass mindestens eine Seitenfläche (37) mindestens eine Zone mit reduzierter Stärke aufweist.

7. Einheit nach einem der Ansprüche 1 bis 6, **dadurch gekennzeichnet, dass** das Verstärkungselement (31) ein Tragelement (43) der Stoßfängerhaut (19) trägt und/oder bemessen ist, damit seine obere Fläche unter der Stoßfängerhaut (19) derart platziert ist, dass die Stoßfängerhaut sich darauf auflegt.

8. Einheit nach einem der Ansprüche 1 bis 7, **dadurch gekennzeichnet, dass** das Tragteil (21) aus einem Kunststoffmaterial, bevorzugt aus Polypropylen, besteht.

9. Kraftfahrzeug, **dadurch gekennzeichnet, dass** es mindestens eine Einheit nach einem der Ansprüche 1 bis 8 umfasst.

## Claims

1. An assembly including a structure of a motor vehicle and a shock absorbing system, said shock absorbing system including a support part (21) of a bumper, at least one shock absorbing beam (17) mounted on the structure of a vehicle, a bumper skin (19) covering the beam (17) and the support part (21), said support part (21) including a base (23) having means for attachment to an element (3) of the structure of a motor vehicle, the part (21) including at least one reinforcing element (31) connected to the base (23) by one of its ends and dimensioned so as to extend up to placing its other end, designated terminal, above the shock absorbing beam (17), the reinforcing element (31) being present in the form of a profile and including at the level of its terminal end a face (35) forming a surface substantially parallel to the base (23) and intended to cooperate with the bumper skin for the purpose of the deformation of said reinforcing element (31), **characterized in that** said face (35) of the terminal end has a height lower than the height presented by the reinforcing element at the level of its end which is connected to the base.

2. The assembly according to claim 1, **characterized in that** the reinforcing element (31) has a lower face and is dimensioned so that at the level of its terminal end, its lower face is flush with or is placed on the upper face of the beam (17).

3. The assembly according to one of claims 1 or 2, the support part (21) including at least one attaching leg (33) for its attachment to the structure of a vehicle, **characterized in that** the attaching leg or legs (33) are bent.

4. The assembly according to one of claims 1 to 3, **characterized in that** at least one reinforcing element (31) is integrally formed with the base (23).

5. The assembly according to one of claims 1 to 4, **characterized in that** the reinforcing element (31) is present in the form of a profile and includes at least one lateral face (37) extending from the base (23) up to the terminal end and **in that** the lateral face or faces (37) are curved or inclined with respect to the base (23).

6. The assembly according to one of claims 1 to 5, **characterized in that** the reinforcing element (31) is present in the form of a profile and includes at least one lateral face (37) extending from the base up to the terminal end and **in that** at least one lateral face (37) has at least one region of reduced thickness.

7. The assembly according to one of claims 1 to 6, **characterized in that** the reinforcing element (31) carries a support element (43) of the bumper skin (19) and/or is dimensioned so that its upper face is placed under the bumper skin (19) such that said bumper skin is placed above.

8. The assembly according to one of claims 1 to 7, **characterized in that** the support part (21) is made of plastic material, preferably of polypropylene.

9. A motor vehicle, **characterized in that** it includes at least one assembly according to one of claims 1 to 8.
